# EUROPEAN PATENT APPLICATION

(11) **EP 4 817 944 A1**
(43) Date of publication of application: **07.10.2026**
(21) Application number: 25210619.0
(22) Date of filing: 23.10.2025
(51) Int. Cl.: B60L 53/24, B60L 58/19, H02J 7/00

(54) **VEHICLE AND CHARGING CONTROL METHOD OF VEHICLE**

(30) Priority: 31.03.2025 KR 20250041183
(71) Applicant: Hyundai Motor Company, Seoul 06797 (KR); Kia Corporation, Seoul 06797 (KR)
(72) Inventor: HONG, Sung Min, 18280 Hwaseong-si, Gyeonggi-do (KR); LEE, Yong Gyu, 18280 Hwaseong-si, Gyeonggi-do (KR)
(74) Representative: Hoffmann Eitle

(57) **Abstract**

A vehicle according to an embodiment of the present disclosure includes a motor including a plurality of motor windings; a plurality of single-phase battery systems connected to the plurality of motor windings and including a plurality of battery assemblies, wherein the plurality of battery assemblies include a battery and a power converter, respectively, and the power converter includes an inverter including AC module output terminals outputting an AC module voltage from a DC voltage stored in the battery; and a pair of switches switching to connect the plurality of single-phase battery systems in series, in sequence, when charging the battery.

## Description

### CROSS-REFERENCE TO RELATED APPLICATION(S)

This application claims benefit of priority to Korean Patent Application No. 10-2025-0041183 filed on March 31, 2025 in the Korean Intellectual Property Office, the disclosure of which is incorporated herein by reference in its entirety.

### TECHNICAL FIELD

The present disclosure relates to a vehicle and a method for controlling charging of the vehicle.

It is to be noted that the contents described in this section simply provide background information for the present disclosure and do not constitute the prior art.

An eco-friendly vehicle refers to a hybrid electric vehicle, an electric vehicle, a fuel cell electric vehicle, or the like, and may include a high-voltage battery pack, an inverter, a motor, and the like.

A driving system of such an eco-friendly vehicle may be configured with the battery pack, the inverter, and the like as separate devices, and when rapidly charging, the charger may be configured to directly charge the high-voltage battery pack.

### SUMMARY

According to an embodiment of the present disclosure, a vehicle and a method for controlling charging of the vehicle, capable of shortening a charging time period of a battery, may be provided.

According to an aspect of the present disclosure, a vehicle includes a motor including a plurality of motor windings; a plurality of single-phase battery systems connected to the plurality of motor windings and including a plurality of battery assemblies, wherein each of the plurality of battery assemblies include a battery and a power converter, and the power converter includes an inverter including AC module output terminals outputting an AC module voltage from a DC voltage stored in the battery; and a pair of switches switching to connect the plurality of single-phase battery systems in series, in sequence, during charging.

According to an embodiment of the present disclosure, one end of AC system output terminals of a first single-phase battery system among the plurality of single-phase battery systems may be connected to a (+) terminal of a charger and one end of a first motor winding, one end of AC system output terminals of a second single-phase battery system among the plurality of single-phase battery systems may be connected to one end of a second motor winding, one end of AC system output terminals of a third single-phase battery system among the plurality of single-phase battery systems may be connected to one end of a third motor winding, and the other ends of AC system output terminals of the plurality of single-phase battery systems may be mutually connected at a connection point.

According to an embodiment of the present disclosure, the pair of switches may include a first switch provided between one end of AC system output terminals of the first single-phase battery system among the plurality of single-phase battery systems and one end of the first motor winding; and a second switch provided between the connection point and the other end of AC system output terminals of the third single-phase battery system.

According to an embodiment of the present disclosure, a (-) terminal of the charger may be connected to the other end of AC system output terminals of the third single-phase battery system among the plurality of single-phase battery systems.

According to an embodiment of the present disclosure, the inverter may switch to transmit DC power provided from a charger to the battery during charging.

According to an embodiment of the present disclosure, the inverter may be an H-bridge single-phase inverter including an upper switch and a lower switch, provided in a first leg and connected in series; and an upper switch and a lower switch, provided in a second leg and connected in series.

According to an embodiment of the present disclosure, during charging, the upper switch of the first leg and the lower switch of the second leg may be turned on, or the lower switch of the first leg and the upper switch of the second leg may be turned on.

According to an embodiment of the present disclosure, the number of a plurality of battery assemblies included in one single-phase battery system among the plurality of single-phase battery systems may be equal to the number of a plurality of battery assemblies included in another single-phase battery system among the plurality of single-phase battery systems.

According to an embodiment of the present disclosure, the power converter may further include at least one of a first DC/DC converter including first DC module output terminals connected to the battery in parallel and stepping down a voltage of the battery to a first DC module voltage and outputting the first DC module voltage; or a second DC/DC converter including second DC module output terminals connected to the battery in parallel, stepping up a voltage of the battery to a second DC module voltage and outputting second DC module voltage.

According to an embodiment of the present disclosure, first DC module output terminals provided in the plurality of battery assemblies may be connected to each other in parallel to output a first DC system voltage through first DC system output terminals, and the first DC system output terminals included in the plurality of single-phase battery systems may be connected to each other in parallel to output the first DC module voltage, and may be configured to be connected to a first load using the first DC module voltage as a driving voltage.

According to an embodiment of the present disclosure, second DC module output terminals provided in the plurality of battery assemblies may be connected to each other in series to output a second DC system voltage through second DC system output terminals, and the second DC system output terminals included in the plurality of single-phase battery systems may be connected to each other in parallel to output an integer multiple of the second DC module voltage, and may be configured to be connected to a second load using an integer multiple of the second DC module voltage as a driving voltage.

According to an embodiment of the present disclosure, AC module output terminals provided in the plurality of battery assemblies may be connected to each other in series to output an AC system voltage through AC system output terminals, and AC system output terminals included in the plurality of single-phase battery systems may have the same phase difference and output an integer multiple of the AC module voltage, and may be configured to be connected to an AC load using an integer multiple of the AC module voltage as a driving voltage.

According to an embodiment of the present disclosure, the vehicle may further include a controller performing charging control of the plurality of battery assemblies, for each of the plurality of single-phase battery systems.

According to an embodiment of the present disclosure, the controller may be configured to monitor, in real time, a state-of-charge (SOC) of a battery included in each of the plurality of battery assemblies, for each of the plurality of single-phase battery systems, and bypass a battery of which charging has been completed, based on the monitored state-of-charge.

According to an embodiment of the present disclosure, the controller may be configured to bypass a battery of which state-of-charge of a battery included in each of the plurality of battery assemblies, monitored in real time, is equal to or higher than a preset state-of-charge.

According to an embodiment of the present disclosure, the inverter may include an H-bridge single-phase inverter, and the controller may be configured to turn on one of two upper switches or two lower switches of the H-bridge single-phase inverter, so that a battery included in at least one of the plurality of battery assemblies is bypassed.

According to an embodiment of the present disclosure, the vehicle may further include a cutoff switch connected between a (+) terminal of the charger and one end of AC system output terminals of a first single-phase battery system among the plurality of single-phase battery systems, and the controller may be configured to turn off the cutoff switch, based on charging of a battery included in each of the plurality of battery assemblies being completed.

According to an aspect of the present disclosure, a method for controlling charging of a vehicle, performed by a computing device including at least one processor and a memory storing programs executed by the at least one processor, wherein the method may be configured to monitor, in real time, a state-of-charge (SOC) of a battery included in each of a plurality of battery assemblies for each of a plurality of single-phase systems, and bypass a battery of which charging has been completed, based on the monitored state-of-charge.

According to an embodiment of the present disclosure, each of the plurality of battery assemblies may further include an H-bridge single-phase inverter, and the method may be configured to turn on one of two upper switches or two lower switches of the H-bridge single-phase inverter, so that a battery included in at least one of the plurality of battery assemblies is bypassed.

According to an embodiment of the present disclosure, the vehicle may further include a cutoff switch connected between a (+) terminal of a charger and one end of AC system output terminals of a first single-phase battery system among the plurality of single-phase battery systems, and the method may be configured to turn off the cutoff switch, based on when charging of a battery included in each of the plurality of battery assemblies being completed.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 illustrates an electric vehicle driving system including a general high-voltage battery pack.
FIGS. 2 and 3 illustrate a battery module according to an embodiment of the present disclosure.
FIG. 4 is a view illustrating a connection structure between a plurality of battery modules according to an embodiment of the present disclosure.
FIG. 5 illustrates a single-phase battery system according to an embodiment of the present disclosure.
FIG. 6 is a view illustrating a connection relationship of inverters in a three-phase battery system according to an embodiment of the present disclosure.
FIG. 7 is a view illustrating a connection relationship of first DC/DC converters in a three-phase battery system according to an embodiment of the present disclosure.
FIG. 8 is a view illustrating a connection relationship of second DC/DC converters in a three-phase battery system according to an embodiment of the present disclosure.
FIG. 9 is a view illustrating an inverter structure according to an embodiment of the present disclosure.
FIG. 10 is a configuration diagram of a vehicle according to an embodiment of the present disclosure.
FIG. 11 is a view illustrating a fast charging path by a DC voltage according to an embodiment of the present disclosure.
FIG. 12 is a view illustrating a bypass path of a battery of which charging has been completed according to an embodiment of the present disclosure.
FIG. 13 is a flowchart illustrating a method for controlling charging of a vehicle according to an embodiment of the present disclosure.
FIG. 14 is a block diagram of a computing device capable of fully or partially implementing a control module according to an embodiment of the present disclosure.

### DETAILED DESCRIPTION

Hereinafter, specific embodiments of the present disclosure will be described with reference to the accompanying drawings. The following detailed description is provided to aid in a comprehensive understanding of a method, a device and/or a system described in the present specification. However, the detailed description is for illustrative purposes only, and the present disclosure is not limited thereto.

In describing embodiments of the present disclosure, when it is determined that a detailed description of a known technology related to the present disclosure may unnecessarily obscure the gist of the present disclosure, a detailed description thereof will be omitted. In addition, terms to be described later are terms defined in consideration of functions in the present disclosure, which may be changed depending on intention or custom of a user or operator. Therefore, the definition of these terms should be made based on the contents throughout the present specification. The terminology used herein is for the purpose of describing particular embodiments only and is not to be limiting of the embodiments. As used herein, the singular forms are intended to include the plural forms as well, unless the context clearly indicates otherwise. As used herein, the terms "comprise," "include," "have," or the like, when used in the present specification, specify the presence of stated features, integers, steps, operations, elements, components or a combination thereof, but do not preclude the presence or addition of one or more other features, integers, steps, operations, elements, components, and/or groups thereof.

In addition, 'module voltage' described below may mean voltage output from a battery module, and 'system voltage' may mean voltage output from a battery system configured based on the battery module.

The battery module described below may include a vehicle battery module, and the battery system may include a vehicle single-phase battery system and a vehicle three-phase battery system.

In addition, the present disclosure may be used in various devices to which battery modules and battery systems are applicable, as well as vehicles.

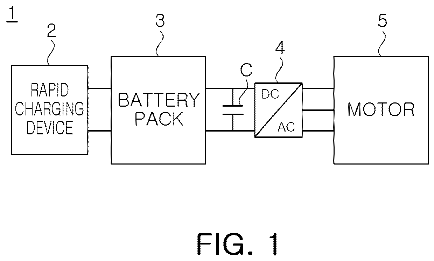

FIG. 1 illustrates an electric vehicle driving system including a general high-voltage battery pack.

As illustrated in FIG. 1, a driving system 1 of an eco-friendly vehicle may include a high-voltage battery pack 3, an inverter 4 including a DC link capacitor C, and a motor 5.

According to this configuration, a charger 2 may be connected to the high-voltage battery pack 3, the charger 2 may directly charge the high-voltage battery pack 3 using a DC voltage, and the inverter 4 may convert a DC voltage stored in the high-voltage battery pack 3 into an AC voltage to drive the motor 5. For example, the charger 2 may be a fast charging facility installed outside the vehicle to provide a DC charging current.

For example, a driving system 1 of a general eco-friendly vehicle may be configured with a battery pack 3, an inverter 4, and the like as separate devices, and a charger 2 may be configured to rapidly charge the high-voltage battery pack 3 when DC charging.

Therefore, in a case in which a low-voltage battery and the inverter are integrated in a battery module and a motor is driven by combining the battery module in plural, the conventional charger 2 using the DC voltage during DC charging may not be used as it is.

In addition, since the driving system 1 of the eco-friendly vehicle operates at high voltage (e.g., 400 V to 800 V), high-voltage components should be used, but the high-voltage components may have disadvantages of being expensive and generating a large amount of heat, as compared to components operating at low voltage. In particular, SiC power semiconductors for high-voltage switching may be applied to the inverter 4 operating at high voltage, but the SiC power semiconductors may have low yields relative to high demand, making it difficult to supply smoothly, and being expensive.

Since the high-voltage battery pack 3 has only one type of high-voltage output, various power conversion devices may be required for application to eco-friendly vehicles. This may be because eco-friendly vehicles have electric/electronic loads with various functions, and each electrical load requires a different voltage.

For example, eco-friendly vehicles have low-voltage loads such as radios or the like operating at low-voltage DC voltage (e.g., 12 V or 24 V), high-voltage loads such as air conditioning systems or the like operating at high-voltage DC voltage (e.g., 400 V or 800 V), and electric/electronic loads requiring various voltages, such as motors or the like operating at high-voltage three-phase AC voltage (e.g., 400 V or 800 V), and may thus require various types of voltages depending on a type of components.

These various power conversion devices may lose energy in a process of converting power from high voltage to low voltage, which may reduce efficiency, and a separate transformer may be additionally required because the voltage should be significantly lowered.

In addition, the conventional driving system 1 of eco-friendly vehicles should have a capacitor for each of the various power conversion devices, and may be expensive and bulky because a high-capacity capacitor is required.

In addition, in the conventional eco-friendly vehicle driving system 1, when a problem occurs in any one of battery cells included in the high-voltage battery pack 3, there may be a disadvantage in which the entire high-voltage battery pack 3 should be replaced, and when a failure occurs in any one of components, the entire system may be stopped, which may deteriorate reliability of the entire system.

The conventional eco-friendly vehicle driving system 1 should design each power electric (PE) system according to different standards depending on a type of vehicle, which may complicate a process, and may increase production costs.

A battery system according to an embodiment of the present disclosure described below may be configured by a series/parallel combination of a plurality of battery modules, and each of the battery modules may include a low-voltage battery and a power conversion device such as an inverter, a converter, or the like operating at a low voltage. In some embodiments, the plurality of battery modules may be referred to as the plurality of battery assemblies.

In other words, a battery system according to an embodiment of the present disclosure may be configured based on a battery module, and each battery module may include a power conversion device, to store/release electric energy as well as perform power conversion in the battery module. Therefore, a battery module according to an embodiment of the present disclosure may convert DC power into AC power or convert a magnitude of battery power, to output the same, as needed. In addition, outputs of battery modules may be connected in series to form a high voltage output, or connected in parallel to form a high current output, and voltages of the battery modules may be monitored to control balancing thereof. Hereinafter, a battery module according to an embodiment of the present disclosure and a battery system including the same will be described in more detail.

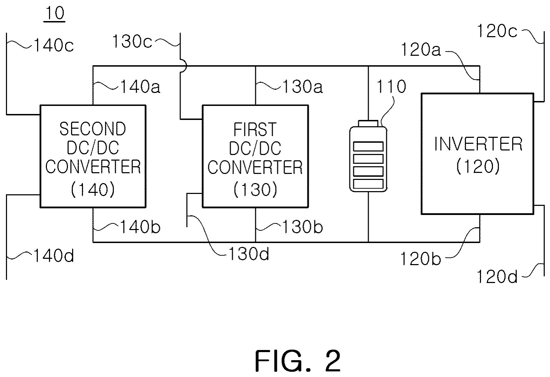

FIG. 2 illustrates a battery module according to an embodiment of the present disclosure.

Referring to FIG. 2, a battery module 10 according to an embodiment of the present disclosure may include a battery 110, an inverter 120, a first DC/DC converter 130, and a second DC/DC converter 140.

The battery 110 may output a battery voltage, and may charge or discharge electric energy. In addition, the battery voltage may constitute a base voltage of the battery module 10, and may provide an input voltage to the inverter 120, the first DC/DC converter 130, and the second DC/DC converter 140.

In addition, the battery 110 may have a battery voltage of a lower magnitude than a general high-voltage battery pack. Therefore, a battery module 10 for a vehicle according to an embodiment of the present disclosure may apply a power conversion device capable of operating at a low voltage, thereby reducing manufacturing costs.

In addition, according to a battery module 10 according to an embodiment of the present disclosure, since various magnitudes and types of voltages may be output depending on a series/parallel combination of the battery modules 10, various types of vehicles may be applied thereto using the battery module 10 of a single standard, and manufacturing costs may be reduced.

For example, when a battery voltage is set to be 100 V, a battery system outputting a voltage of 400 V may be formed by connecting four battery modules 10 in series, and a battery system outputting a voltage of 800 V may be formed by combining eight battery modules 10 in series. In addition, for example, when a battery voltage is set to be 50 V, a battery system outputting a voltage of 400 V may be formed by connecting eight battery modules 10 in series.

In addition, a single-phase battery system may be configured by connecting the battery modules 10 in series and outputting a high-voltage AC voltage using output of the inverter 120, and a three-phase AC voltage may be output using a plurality of single-phase battery systems. In addition, a battery system in which a large amount of current flows may be formed by combining the battery modules 10 in parallel.

The inverter 120 may convert a battery voltage into an AC module voltage and output the AC module voltage. In addition, the inverter 120 may include input terminals 120a and 120b and output terminals 120c and 120d, and the input terminals 120a and 120b of the inverter 120 may be connected to the battery 110 in parallel to receive the battery voltage, and the output terminals 120c and 120d of the inverter 120 may output the AC module voltage. In addition, hereinafter, the output terminals 120c and 120d of the inverter 120 may also be referred to as an AC module output terminals outputting the AC module voltage. In addition, the inverter 120 may be configured to supply AC power according to the AC module voltage to an AC load. For example, the AC load may be a load of a motor or the like using an AC voltage as a driving voltage.

In addition, the first DC/DC converter 130 may step down the battery voltage to a first DC module voltage, lower than the battery voltage, and output the first DC module voltage.

In addition, the first DC module voltage may be set as a driving voltage of a low-voltage load. For example, the low-voltage load may be an electric/electronic load such as various lamps of an electric vehicle and a radio, infotainment system, or the like. In addition, the first DC module voltage may be set as 12V, 24V, or 48V, which may be the driving voltage of the low-voltage load. The voltage magnitude mentioned in the present specification may be only an example, and may be set to have various voltage magnitudes depending on a design.

In addition, the first DC/DC converter 130 may include input terminals 130a and 130b and output terminals 130c and 130d, and the input terminals 130a and 130b of the first DC/DC converter 130 may be connected to the battery 110 in parallel to receive a battery voltage, and the output terminals 130c and 130d of the first DC/DC converter 130 may output a first DC module voltage. In addition, hereinafter, the output terminals 130c and 130d of the first DC/DC converter 130 may be referred to as a first DC module output terminals outputting the first DC module voltage.

In addition, the output terminals 130c and 130d of the first DC/DC converter 130 may be directly connected to a low-voltage load to provide the first DC module voltage.

In an embodiment, in the output terminals of the first DC/DC converter 130, one end (130d) may be grounded, and the other end (130c) may be connected to the low-voltage load to output the first DC module voltage. In another embodiment, both ends in the output terminals of the first DC/DC converter 130 may be connected to both ends of the low-voltage load to output the first DC module voltage.

In addition, the second DC/DC converter 140 may step up the battery voltage to a second DC module voltage and output the second DC module voltage. The second DC module voltage may be set to a value, greater than the first DC module voltage output from the first DC/DC converter 130. In addition, the second DC module voltage may be greater than the battery voltage.

In addition, the second DC module voltage output from the second DC/DC converter 140 may be connected to the second DC module voltage output from another battery module 10, in series, to provide power to a high-voltage load. In other words, the second DC module voltage output from the second DC/DC converter 140 may not provide power to the high-voltage load as a single output, but may be connected to the second DC module voltage of another battery module 10, in series, to provide power to the high-voltage load. Since the battery voltage included in the battery module 10 may be configured as a low voltage, a plurality of battery modules 10 may be combined in series to provide a high voltage, to provide voltage to a high-voltage load of an air conditioning system or the like. In other words, output terminals 140c and 140d of the second DC/DC converter 140 may be connected to output terminals of a second DC/DC converter of another battery module, in series, to form a high voltage and provide power to the high-voltage load.

In addition, the second DC/DC converter 140 may include input terminals 140a and 140b and output terminals 140c and 140d, and the input terminals 140a and 140b of the second DC/DC converter 140 may be connected to the battery 110 in parallel to receive the battery voltage, and the output terminals 140c and 140d of the second DC/DC converter 140 may output a second DC module voltage. In addition, the output terminals 140c and 140d of the second DC/DC converter 140 in the present specification may also be referred to as second DC module output terminals outputting the second DC module voltage.

In addition, the output terminals 140c and 140d of the second DC/DC converter 140 may be connected to output terminals of a second DC/DC converter included in another battery module, in series, or may be connected to a high-voltage load. For example, a specific connection structure with another battery module 10 will be described later.

In addition, the battery 110 may be configured to be connected to the input terminals 120a and 120b of the inverter, the input terminals 130a and 130b of the first DC/DC converter 130, and the input terminals 140a and 140b of the second DC/DC converter 140, in parallel.

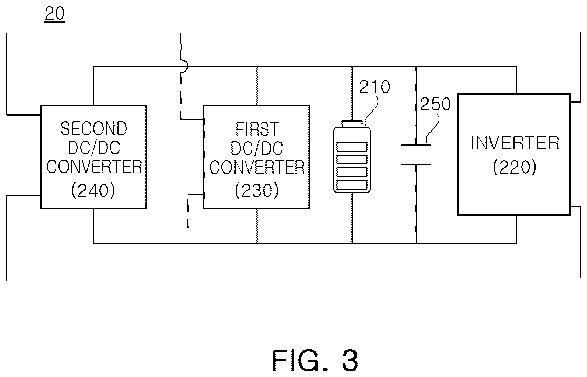

FIG. 3 illustrates a battery module according to an embodiment of the present disclosure.

Referring to FIG. 3, a battery module 20 according to an embodiment of the present disclosure may include a battery 210, an inverter 220, a first DC/DC converter 230, a second DC/DC converter 240, and a common capacitor 250. In addition, the common capacitor 250 may be connected to the battery 210 in parallel. The battery module 20 illustrated in FIG. 3 may include all configurations of the battery module 10 illustrated in FIG. 2, and may further include the common capacitor 250.

According to a battery module 20 according to an embodiment of the present disclosure, since a single common capacitor may be shared without applying each inverter and applying individual capacitors to each converter device, a volume may be reduced, and since a low-voltage capacitor may be applied, production costs may be reduced.

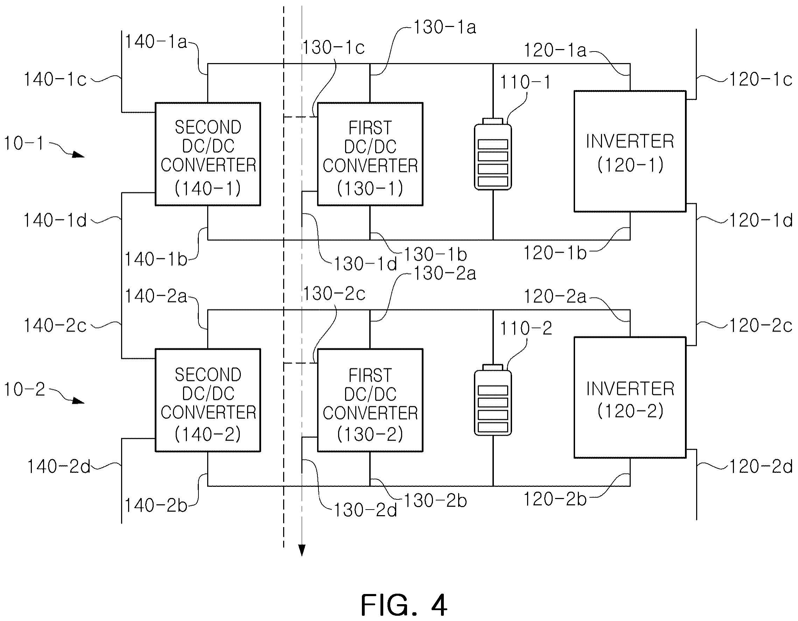

FIG. 4 is a view illustrating a connection structure between a plurality of battery modules according to an embodiment of the present disclosure.

Referring to FIG. 4, a first battery module 10-1 and a second battery module 10-2 may include the same configuration, and may be configured with the same structure. For example, the first battery module 10-1 and the second battery module 10-2 may include batteries 110-1 and 110-2, inverters 120-1 and 120-2, first DC/DC converters 130-1 and 130-2, and second DC/DC converters 140-1 and 140-2, respectively. Alternatively, as described with reference to FIG. 3, the first battery module 10-1 and the second battery module 10-2 may further include a common capacitor.

In addition, a plurality of battery modules may be connected to form a battery system, and a connection relationship between the plurality of battery modules included in the battery system may be equal to the structure illustrated in FIG. 4.

More specifically, output terminals 120-1c and 120-1d of the inverter 120-1 included in the first battery module 10-1 may be connected to output terminals 120-2c and 120-2d of the inverter 120-2 included in the second battery module 10-2 in series. In addition, when the inverter outputs an AC module voltage, the inverter 120-1 included in the first battery module 10-1 and the inverter 120-2 included in the second battery module 10-2 may be connected in series to output the AC module voltage twice in magnitude. For example, when the AC module voltage is set to 100 V, two inverters 120-1 and 120-2 connected in series may output an AC voltage of 200 V. For example, an magnitude of the AC voltage may mean a maximum value, an effective value, or an average value of the AC voltage.

In addition, output terminals 130-1c and 130-1d of the first DC/DC converter 130-1 included in the first battery module 10-1 and output terminals 130-2c and 130-2d of the first DC/DC converter 130-2 included in the second battery module 10-2 may be connected to each other in parallel. In an embodiment, one end (130-1d) of the output terminals of the first DC/DC converter 130-1 included in the first battery module 10-1 may be grounded, and one end (130-2d) of the output terminals of the first DC/DC converter 130-2 included in the second battery module 10-2 may be grounded. In addition, the other end (130-1c) of the output terminals of the first DC/DC converter 130-1 included in the first battery module 10-1 and the other end (130-2c) of the output terminals of the first DC/DC converter 130-2 included in the second battery module 10-2 may be connected to each other in parallel to output a first DC module voltage. In addition, output terminals in which the other ends of the output terminals of the first DC/DC converters are connected to each other in parallel may output the first DC module voltage, and may be connected to a low-voltage load using the first DC module voltage as a driving voltage, to provide voltage.

In addition, output terminals 140-1c and 140-1d of the second DC/DC converter 140-1 included in the first battery module 10-1 may be connected to output terminals 140-2c and 140-2d of the second DC/DC converter 140-2 included in the second battery module 10-2 in series. More specifically, one end (140-1d) of the output terminals of the second DC/DC converter 140-1 included in the first battery module 10-1 may be connected to the other end (140-2c) of the output terminals of the second DC/DC converter 140-2 of the second battery module 10-2.

In addition, when the second DC/DC converters 140-1 and 140-2 output a second DC module voltage, the second DC/DC converter 140-1 included in the first battery module 10-1 and the second DC/DC converter 140-2 included in the second battery module 10-2 may be connected to each other in series to output the second DC module voltage twice in magnitude. For example, when the second DC module voltage is set to 100 V, the two second DC/DC converters 140-1 and 140-2 connected to each other in series may output 200 V.

To summarize, in the first battery module 10-1 and the second battery module 10-2, the inverters may be connected to each other in series, the first DC/DC converters may be connected to each other in parallel, and the second DC/DC converters may be connected to each other in series.

In addition, a single-phase battery system according to an embodiment of the present disclosure may include a plurality of battery modules 10-1, 10-2, ..., and 10-N. In addition, each of the plurality of battery modules 10-1, 10-2, ..., and 10-N included in the single-phase battery system 100 may be identical to the battery module 10 or 20 illustrated in FIG. 2 or FIG. 3. In addition, the plurality of battery modules 10-1, 10-2, ..., and 10-N included in the single-phase battery system may have a connection structure between the battery modules illustrated in FIG. 4.

Referring again to FIG. 2, a battery module according to an embodiment of the present disclosure may include first DC module output terminals 130c and 130d corresponding to output terminals of a first DC/DC converter 130, second DC module output terminals 140c and 140d corresponding to output terminals of a second DC/DC converter 140, and AC module output terminals 120c and 120d corresponding to output terminals of an inverter 120.

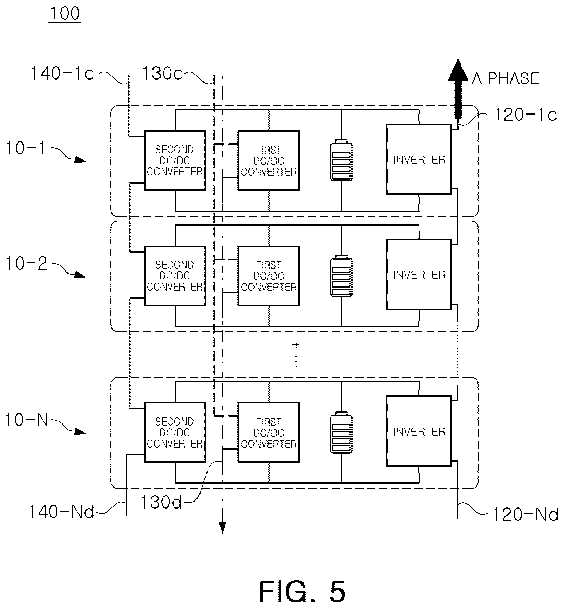

In addition, referring to FIG. 5, a single-phase battery system 100 according to an embodiment of the present disclosure may include first DC system output terminals 130c and 130d configured by connecting first DC module output terminals included in each of a plurality of battery modules in parallel. For example, the first DC system output terminals 130c and 130d may output a first DC system voltage, and the first DC system voltage may have the same magnitude as a first DC module voltage output from output terminals of a first DC/DC converter.

In addition, a single-phase battery system 100 according to an embodiment of the present disclosure may include second DC system output terminals 140-1c and 140-Nd configured by connecting second DC module output terminals included in each of a plurality of battery modules in series. For example, the second DC system output terminals 140-1c and 140-Nd may output a second DC system voltage, and the second DC system voltage may have a magnitude, which may be an integer (N) times a second DC module voltage output from the output terminals of the second DC/DC converter.

In addition, a single-phase battery system 100 according to an embodiment of the present disclosure may include AC system output terminals 120-1c and 120-Nd configured by connecting AC module output terminals included in each of a plurality of battery modules in series. In addition, the AC system output terminals 120-1c and 120-Nd may output an AC system voltage, and the AC system voltage may have a magnitude, which may be an integer (N) times an AC module voltage output from the output terminals of the inverter. The AC system output terminals may provide AC power to an AC load, and may provide an input voltage for a single phase of a three-phase AC voltage.

In summary, the single-phase battery system 100 may provide various output voltages including the first DC system voltage, the second DC system voltage, and the AC system voltage by connecting each device of the plurality of battery modules in series/parallel.

In addition, the electric vehicle may include a low-voltage load operating at low voltage, a high-voltage load operating at high voltage, and an AC load of a motor or the like operating at a high-voltage three-phase AC voltage. In addition, the low-voltage load may use the first DC system voltage as a driving voltage, the high-voltage load may use the second DC system voltage as a driving voltage, and the AC load may use the AC system voltage as a driving voltage.

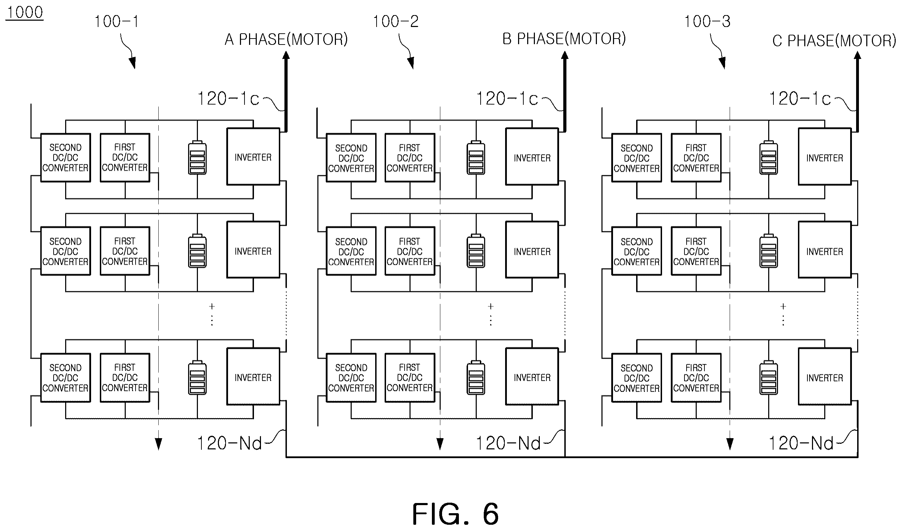

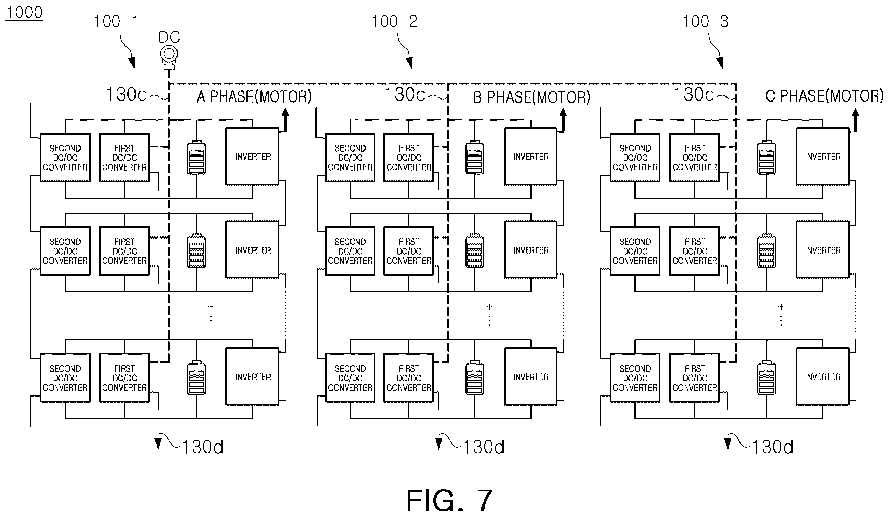

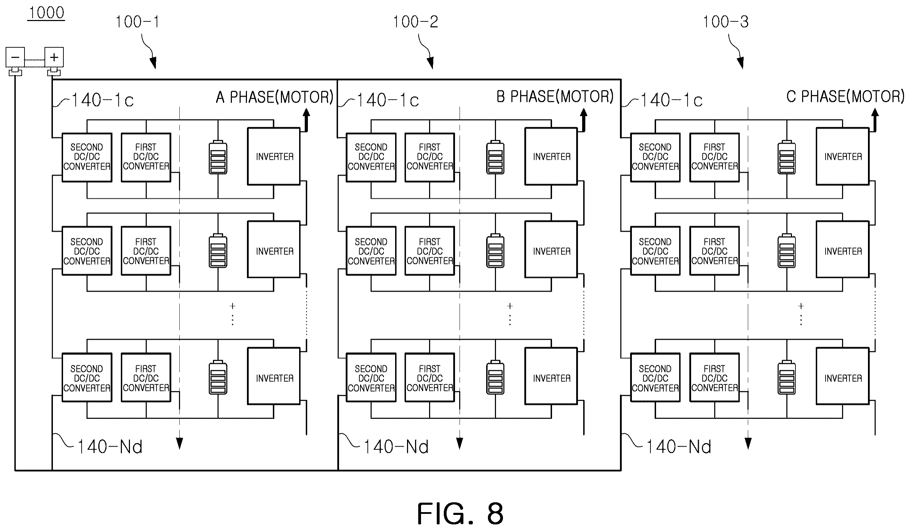

FIG. 6 is a view illustrating a connection relationship of inverters in a three-phase battery system 1000 according to an embodiment of the present disclosure. FIG. 7 is a view illustrating a connection relationship of first DC/DC converters in a three-phase battery system according to an embodiment of the present disclosure. In addition, FIG. 8 is a view illustrating a connection relationship of second DC/DC converters in a three-phase battery system according to an embodiment of the present disclosure.

Referring to FIGS. 6 to 8, a three-phase battery system 1000 according to an embodiment of the present disclosure may include a plurality of single-phase battery systems 100-1, 100-2, and 100-3, and each of the single-phase battery systems may include a plurality of battery modules.

Referring to FIG. 6, a three-phase battery system 1000 according to an embodiment of the present disclosure may include three single-phase battery systems 100-1, 100-2, and 100-3. In addition, the single-phase battery systems may include AC system output terminals 120-1c and 120-Nd configured by connecting inverter output terminals to each other in series. In addition, each of the AC system output terminals 120-1c and 120-Nd included in the three single-phase battery systems 100-1, 100-2, and 100-3 may output different AC voltages having the same magnitude and the same phase difference.

For example, each of the AC system output terminals 120-1c and 120-Nd included in the three single-phase battery systems 100-1, 100-2, and 100-3 may output different AC voltages having a phase difference of 120 degrees from each other. Therefore, the three-phase battery system 100-1, 100-2, and 100-3 may output a three-phase AC voltage, and may provide a driving voltage to an AC load (e.g., a motor) using the three-phase AC voltage as a driving voltage.

In addition, referring to FIG. 7, a plurality of single-phase battery systems 100-1, 100-2, and 100-3 included in a three-phase battery system 1000 according to an embodiment of the present disclosure may include first DC system output terminals 130c and 130d in which a plurality of first DC/DC converters are connected to each other in parallel, respectively, to output a first DC system voltage.

To explain again, when a single-phase battery system 100 includes N first DC/DC converters, all 3*N first DC/DC converters included in the three-phase battery system 1000 may be connected in parallel to output a first DC module voltage or a first DC system voltage having the same magnitude as the first DC module voltage.

In addition, referring to FIG. 8, a plurality of single-phase battery systems 100-1, 100-2, and 100-3 included in a three-phase battery system 1000 according to an embodiment of the present disclosure may include second DC system output terminals 140-1c and 140-Nd in which a plurality of second DC/DC converters are connected to each other in series, respectively, to output a second DC system voltage. In addition, the second DC system output terminals 140-1c and 140-Nd included in each of the plurality of single-phase battery systems 100-1, 100-2, and 100-3 may be connected to each other in parallel. For example, in a single-phase battery system 100, second DC module output terminals may be connected in series to form second DC system output terminals, and in the three-phase battery system 1000, the plurality of second DC system output terminals may be connected to each other in parallel.

In FIGS. 4 to 8, (-) terminals of the first DC/DC converters are illustrated as being connected to ground, but the (-) terminals of the first DC/DC converters may be simply connected as one.

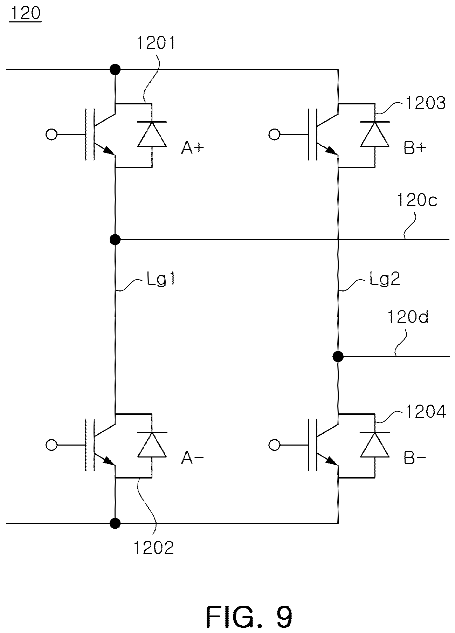

FIG. 9 is a view illustrating an inverter structure according to an embodiment of the present disclosure.

An inverter 120 may include an upper switch 1201 and a lower switch 1202, provided in a first leg Lg1 and connected to each other in series, and an upper switch 1203 and a lower switch 1204, provided in a second leg Lg2 and connected to each other in series. For example, one end (120c) of output terminals 120c and 120d of the inverter 120 may be between the upper switch 1201 and the lower switch 1202 of the first leg Lg1, and the other end (120d) of the output terminals 120c and 120d of the inverter 120 may be between the upper switch 1203 and the lower switch 1204 of the second leg Lg2.

Referring to FIG. 9, the inverter 120 may include a plurality of power semiconductor devices, for example, Si-MOSFET (metal oxide semiconductor field effect transistor, MOSFET) devices 1201, 1202, 1203, and 1204, and may be configured as an H-bridge single-phase inverter structure.

In conventional electric vehicle systems, SiC power semiconductors may be mainly applied. Such SiC power semiconductors may have high efficiency and a fast switching speed, but may be expensive.

In addition, the conventional electric vehicle systems may sometimes use an insulated gate bipolar transistor (IGBT) at a low voltage, but the IGBT may be relatively inexpensive, but may have a slow switching speed.

The Si-MOSFET devices may have a fast switching speed, and may be relatively inexpensive, but performance thereof may deteriorate at high voltages, making them difficult to apply to the conventional high-voltage electric vehicle systems.

Since a battery module according to an embodiment of the present disclosure may be driven at low voltages, Si-MOSFET devices may be applied to an inverter. Therefore, an inverter included in a battery module according to an embodiment of the present disclosure may reduce production costs by using a plurality of Si-MOSFET elements, while having a fast switching speed. Therefore, electric power efficiency may be improved, such that a vehicle driving range may be increased, and as the driving range increases, battery capacity may be reduced to reduce costs.

In addition, an inverter according to an embodiment of the present disclosure may be configured as an H-bridge single-phase inverter structure to maintain stability even at a large amount of current.

In addition, although FIG. 9 illustrates a case in which an H-bridge circuit is configured using four Si-MOSFETs as an example, an H-bridge circuit may also be configured by connecting a plurality of Si-MOSFETs in parallel to switch a large amount of current.

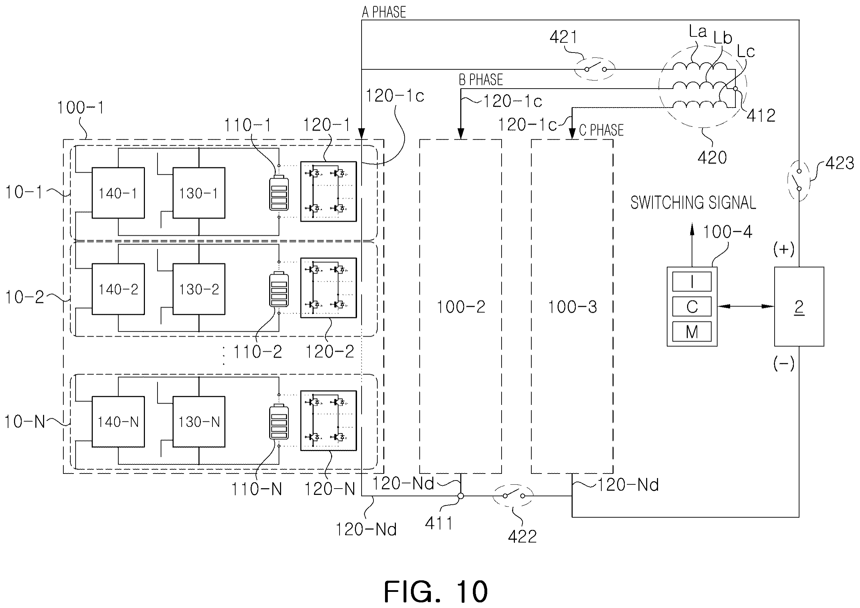

FIG. 10 is a configuration diagram of a vehicle according to an embodiment of the present disclosure.

As illustrated in FIG. 10, a vehicle according to an embodiment of the present disclosure may include a plurality of single-phase battery systems 100-1, 100-2, and 100-3, a controller 100-4, and a motor 420 having a plurality of motor windings La, Lb, and Lc.

First, each of the plurality of single-phase battery systems 100-1, 100-2, and 100-3 may include a plurality of battery modules.

For example, in phase A of the motor, a first single-phase battery system 100-1 may include a plurality of battery modules 10-1, 10-2, ..., and 10-N, and each of the plurality of battery modules 10-1, 10-2, ..., and 10-N may include batteries 110-1, 110-2, ..., and 110-N, inverters 120-1, 120-2, ..., and 120-N, first DC/DC converters 130-1, 130-2, ..., and 130-N, and second DC/DC converters 140-1, 140-2, ..., and 140-N. For example, input terminals of the batteries 110-1, 110-2, ..., and 110-N and input terminals of the inverters (120-1, 120-2, ..., 120-N) may be connected to each other in parallel, and output terminals of the inverters 120-1, 120-2, ..., and 120-N may be connected to output terminals of inverters included in adjacent battery modules in series.

Although not separately illustrated for the sake of simplicity of the invention, a second single-phase battery system 100-2 and a third single-phase battery system 100-3 of each of the other phases (B phase and C phase) of the motor may also have the same configuration.

In addition, the number of a plurality of battery modules included in one single-phase battery system among the plurality of single-phase battery systems 100-1, 100-2, and 100-3 may be equal to the number of a plurality of battery modules included in another single-phase battery system among the plurality of single-phase battery systems.

In addition, according to an embodiment of the present disclosure, one end (120-1c) of AC system output terminals of the first single-phase battery system 100-1 among the plurality of single-phase battery systems 100-1, 100-2, and 100-3 may be connected to a (+) terminal of a charger 2 and one end of a first motor winding La, one end (120-1c) of AC system output terminals of the second single-phase battery system 100-2 among the plurality of single-phase battery systems 100-1, 100-2, and 100-3 may be connected to one end of a second motor winding Lb, and one end (120-1c) of AC system output terminals of the third single-phase battery system 100-3 among the plurality of single-phase battery systems 100-1, 100-2, and 100-3 may be connected to one end of a third motor winding Lc.

In the present disclosure, a voltage of the charger 2 may be a DC voltage three times a system voltage, for example, when a second DC system voltage is 100 V, a voltage of the charger 2 may have a DC voltage magnitude of 300 V.

In addition, the other end (120-Nd) of the AC system output terminals of each of the plurality of single-phase battery systems 100-1, 100-2, and 100-3 may be mutually connected at a connection point 411.

A (-) terminal of the charger 2 may be connected to the other end (120-Nd) of the AC system output terminals of the third single-phase battery system 100-3 among the plurality of single-phase battery systems 100-1, 100-2, and 100-3.

In addition, AC module output terminals provided in each of the plurality of battery modules may be connected to each other in series, as illustrated in FIGS. 4, 5, 6, and 10, to output an AC system voltage through AC system output terminals 120-1c and 120-Nd, and the AC system output terminals 120-1c and 120-Nd included in each of the plurality of single-phase battery systems 100-1, 100-2, and 100-3 may have the same phase difference and may output an integer multiple of an AC module voltage, and may be connected to an AC load using an integer multiple of the AC module voltage as a driving voltage.

In addition, according to an embodiment of the present disclosure, as illustrated in FIGS. 4, 5, 7, and 10, first DC module output terminals provided in each of the plurality of battery modules may be connected to each other in parallel to output a first DC system voltage through first DC system output terminals 130c and 130d, and the first DC system output terminals 130c and 130d included in each of the plurality of single-phase battery systems 100-1, 100-2, and 100-3 may be connected to each other in parallel to output a first DC module voltage, and may be connected to a first load using the first DC module voltage as a driving voltage.

In addition, according to an embodiment of the present disclosure, as illustrated in FIGS. 4, 5, 8, and 10, second DC module output terminals provided in each of the plurality of battery modules may be connected to each other in series to output a second DC system voltage through second DC system output terminals 140-1c and 140-Nd, and the second DC system output terminals 140-1c and 140-Nd included in each of the plurality of single-phase battery systems 100-1, 100-2, and 100-3 may be connected to each other in parallel to output an integer multiple of the second DC module voltage, and may be connected to a second load that uses an integer multiple of the second DC module voltage as a driving voltage.

In addition, as illustrated in FIG. 10, according to an embodiment of the present disclosure, a cutoff switch 423 may be further included between the (+) terminal of the charger 2 and one end (120-1c) of the AC system output terminals of the first single-phase battery system 100-1 among the plurality of single-phase battery systems 100-1, 100-2, and 100-3.

In addition, a pair of switches 421 and 422 switching to sequentially connect the plurality of single-phase battery systems 100-1, 100-2, ..., and 100-N in series during charging may be further included.

The pair of switches 421 and 422 may include a first switch 421 provided between one end (120-1c) of the AC system output terminals of the first single-phase battery system 100-1 among the plurality of single-phase battery systems 100-1, 100-2, and 100-3 and one end of the first motor winding La, and a second switch 422 provided between the connection point 411 and the other end (120-Nd) of the AC system output terminals of the third single-phase battery system 100-3.

The motor 420 may include a plurality of motor windings La, Lb, and Lc connected at a neutral point 412, and the plurality of motor windings La, Lb, and Lc may be connected to each of the plurality of single-phase battery systems 100-1, 100-2, ..., and 100-N.

The motor windings La, Lb, and Lc include, for example, stator windings of the motor, and may be a kind of filter for preventing a sudden change in current flowing into the battery. In this manner, by utilizing the existing stator windings instead of a separate inductor, there may be no need to add an inductor, so costs may be reduced, and since there may be no need to perform an operation of connecting the neutral point, a time period required for the operation may be reduced.

Specifically, the other ends of each of the plurality of motor windings La, Lb, and Lc may be mutually connected at the neutral point 412, and one end of each of the plurality of motor windings La, Lb, and Lc may be connected to each of the plurality of single-phase battery systems 100-1, 100-2, and 100-3.

In addition, each of the ends of the plurality of motor windings La, Lb, and Lc may be connected to one end (120-1c) of the output terminals (i.e., AC system output terminal) 120-1c and 120-Nd of the inverter included in one of the plurality of battery modules included in each of the plurality of single-phase battery systems 100-1, 100-2, and 100-3, for example, the battery module located on an uppermost end.

For example, in phase A of the motor, one end of the first motor winding La may be connected to one end (120-1c) of the AC system output terminals 120-1c and 120-Nd, which may be the output terminals of the inverter 120-1 included in one of the plurality of battery modules 10-1, 10-2, ..., and 10-N included in the single-phase battery system 100-1, for example, the battery module located on an uppermost end. It may be connected to other single-phase battery systems (100-2, 100-3) in the same manner.

The controller 100-4 may include an input unit I, a processor C, and a memory M, and may control the inverter and other switches through switching signals.

The input unit I may receive a state-of-charge (SOC) of the battery included in each of the plurality of battery modules in real time for each of the plurality of single-phase battery systems, and transmit the same to the processor C. The state-of-charge (SOC) of the battery may be received from a battery management system (BMS), which is not illustrated. In the following, balancing control may be described based on the state-of-charge (SOC) of the battery, but it is of course possible to use a voltage of the battery instead of the state-of-charge.

The processor C may monitor the state-of-charge of the battery included in each of the plurality of battery modules in real time for each of the plurality of single-phase battery systems based on the state-of-charge (SOC) of the battery input through the input unit I.

Thereafter, the processor C may bypass a battery of which charging has been completed, based on the state-of-charge of the battery included in each of the plurality of battery modules, monitored in real time.

For example, the processor C may bypass a battery of which state-of-charge of the battery included in each of the plurality of battery modules monitored in real time is higher than a preset state-of-charge. When bypassing a battery included in at least one of the plurality of battery modules, the processor C may turn on one of two upper switches 1201 and 1203 or two lower switches 1202 and 1204 of the H-bridge single-phase inverter illustrated in FIG. 9. For example, the two upper switches 1201 and 1203 may be turned on and the two lower switches 1202 and 1204 may be turned off, or the two upper switches 1201 and 1203 may be turned off and the two lower switches 1202 and 1204 may be turned on.

In addition, the processor C may turn off the cutoff switch 423 when charging of the batteries included in each of the plurality of battery modules has been completed.

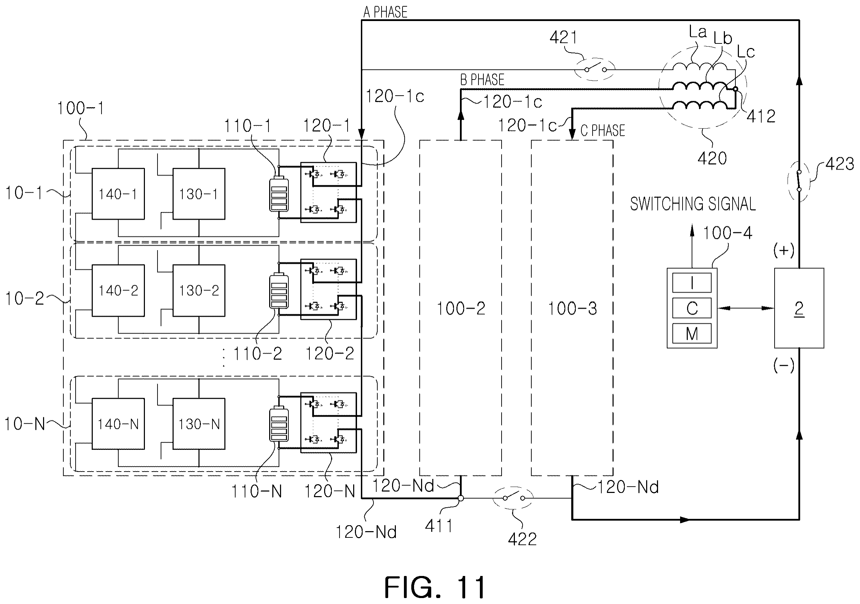

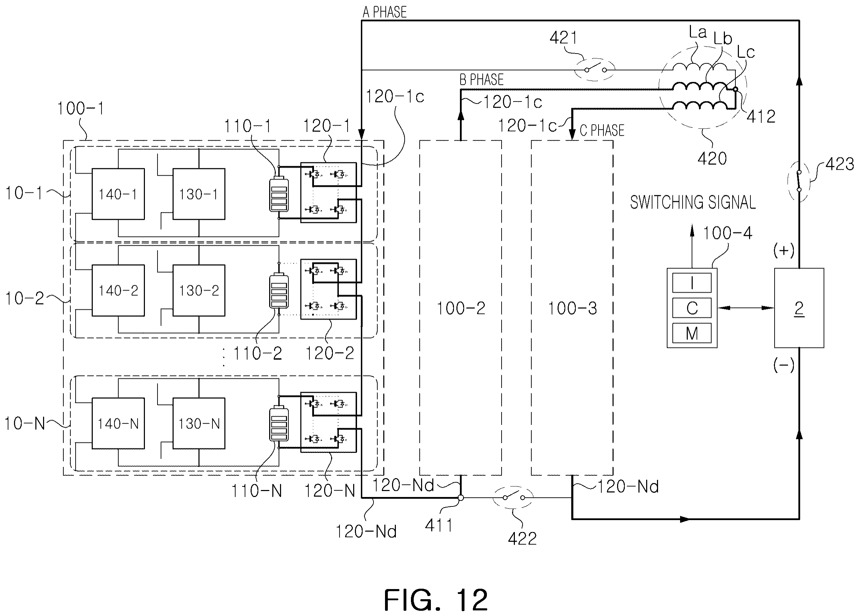

FIG. 11 is a view illustrating a fast charging path by a DC voltage according to an embodiment of the present disclosure, and FIG. 12 is a view illustrating a bypass path of a battery of which charging has been completed according to an embodiment of the present disclosure.

Hereinafter, although a single-phase battery system 100-1 is illustrated, the same may be applied to other single-phase battery systems 100-2 and 100-3.

Specifically, according to an embodiment of the present disclosure, as illustrated in FIGS. 9 to 11, an upper switch 1201 of a first leg Lg1 and a lower switch 1204 of a second leg Lg2 of each of inverters 120-1, 120-2, ..., and 120-N may be turned on, and a lower switch 1202 of the first leg Lg1 and an upper switch 1203 of the second leg Lg2 may be turned off. Conversely, also, the upper switch 1201 of the first leg Lg1 and the lower switch 1204 of the second leg Lg2 of each of the inverters 120-1, 120-2, ..., and 120-N may be turned off, and the lower switch 1202 of the first leg Lg1 and the upper switch 1203 of the second leg Lg2 may be turned on.

Therefore, batteries 110-1, 110-2, .., and 110-N included in each of battery systems 100-1, 100-2, and 100-3 may be charged through a path (see, a thick solid line), as illustrated in FIG. 11. For example, the inverters 120-1, 120-2, ..., and 120-N may operate to transfer a DC voltage provided from a charger 2 to a battery through motor windings La, Lb, and Lc during fast charging.

as illustrated in FIG. 12, when the battery 110-2 in one of the battery modules 10-2 of the first single-phase battery system 100-1 is fully charged during charging, the battery 110-2 may be bypassed by turning on the two upper switches 1201 and 1203 or the two lower switches 1202 and 1204 of a H-bridge single-phase inverter, as illustrated in FIG. 9.

As described above, according to an embodiment of the present disclosure, a charging time period of the battery may be shortened by sequentially connecting the plurality of single-phase battery systems in series during charging, and charging the battery with a DC voltage three times a system voltage. In addition, according to an embodiment of the present disclosure, by bypassing a battery that has been fully charged, the charging time period of the battery may be shortened.

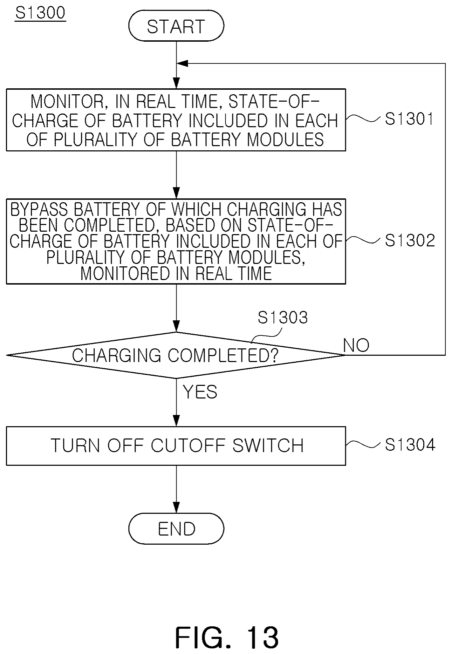

FIG. 13 is a flowchart illustrating a method for controlling charging of a vehicle according to an embodiment of the present disclosure.

Referring to FIG. 13, a method (S1300) for controlling charging of a vehicle according to an embodiment of the present disclosure may be started with an operation of monitoring in real time a state-of-charge of a battery included in each of a plurality of battery modules for each of a plurality of single-phase systems while a charging operation is performed (S1301).

Thereafter, a controller 100-4 may bypass a battery of which charging has been completed, based on the state-of-charge of the battery included in each of the plurality of battery modules, monitored in real time (S1302).

For example, the controller 100-4 may bypass a battery of which the state-of-charge of the battery included in each of the plurality of battery modules, monitored in real time, is higher than a preset state-of-charge. As described above, when bypassing a battery included in at least one of the plurality of battery modules, a processor C may turn on one of the two upper switches 1201 and 1203 or the two lower switches 1202 and 1204 of the H-bridge single-phase inverter, as illustrated in FIG. 9.

Thereafter, the controller 100-4 determines whether charging of all batteries have been completed (S1303), and when charging has been completed, S1304 may proceed, and when charging is still required, S1301 may proceed.

Finally, when charging of the batteries included in each of the plurality of battery modules have been completed, the controller 100-4 may turn off a cutoff switch 423 (S1304).

As described above, according to an embodiment of the present disclosure, a charging time period of the battery may be shortened by sequentially connecting the plurality of single-phase battery systems in series during charging, and charging the battery with a DC voltage three times a system voltage.

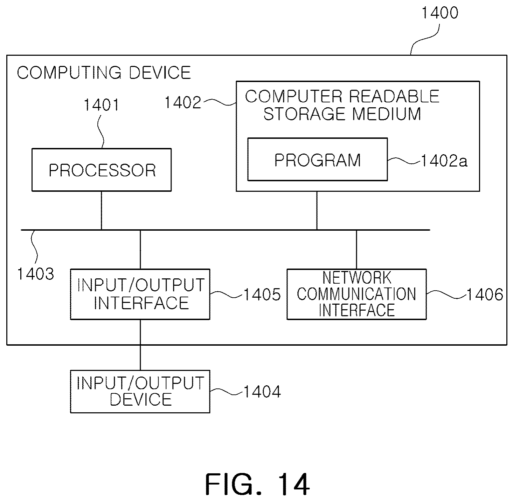

Finally, FIG. 14 is a block diagram of a computing device capable of fully or partially implementing a controller 100-4 according to an embodiment of the present disclosure.

As illustrated in FIG. 14, the computing device 1400 may include at least one processor 1401, at least one computer-readable storage medium 1402, and at least one communication bus 1403.

The processor 1401 may enable the computing device 1400 to operate according to the above-mentioned example embodiments. For example, the processor 1401 may execute one or more programs stored in the computer-readable storage medium 1402. The one or more programs may include one or more computer-executable instructions, which, when executed by the processor 1401, cause the computing device 1400 to perform operations according to example embodiments.

The computer-readable storage medium 1402 may be configured to store a computer-executable instruction or program code, program data, and/or information having other suitable form. A program 1402a stored in the computer-readable storage medium 1402 may include a set of instructions executable by the processor 1401. In an embodiment, the computer-readable storage medium 1402 may include a memory (a volatile memory, such as a random access memory, a non-volatile memory, or an appropriate combination thereof), at least one magnetic disk storage device, at least one optical disk storage device, at least one flash memory device, a storage medium accessible by the computing device 1400 and storing desired information, or a suitable combination thereof.

The communication bus 1403 may be interconnected with various components of the computing device 1400 by including the processor 1401 and the computer-readable storage medium 1402.

The computing device 1400 may also include at least one input/output interface 1405 and at least one network communication interface 1406, providing an interface for at least one input/output device 1404. The input/output interface 1405 and the network communication interface 1406 may be connected to the communication bus 1403. The network may be any one of a cellular network, such as global system for mobile communications (GSM), enhanced data rates for GSM evolution (EDGE), general packet radio service (GPRS), code division multiple access (CDMA), time division-CDMA (TD-CDMA), universal mobile telecommunications system (UMTS), long term evolution (LTE), or another cellular network.

The input/output device 1404 may be coupled to other components of the computing device 1400 through the input/output interface 1405. An example input/output device 1404 may include, but is not limited to, an input device such as a pointing device (such as a mouse, a trackpad, or the like), a keyboard, a touch input device (such as a touchpad, a touch screen, or the like), a voice or sound input device, various types of sensor devices, and/or various types of imaging devices, and/or an output device such as a display device, a printer, a speaker, and/or a network card. The example input/output device 1404 may be included in the computing device 1400 as a component constituting the computing device 1400, or may be connected to the computing device 1400 as a separate device distinct from the computing device 1400.

An embodiment of the present disclosure may include a program for performing methods described in the present specification on a computer, and a computer-readable recording medium containing the program. The computer-readable recording medium may include a program instruction, a local data file, a local data structure, or the like, singly or in combination. The medium may be those specifically designed and constructed for the present disclosure, or may be those commonly available in a computer software field. Examples of computer-readable recording medium may include a magnetic medium such as a hard disk, a floppy disk, or a magnetic tape, an optical recording medium such as a CD-ROM or a DVD, and a hardware device specifically configured to store and perform a program instruction such as a ROM, a RAM, a flash memory, or the like. Examples of the program may include not only a machine language code such as that generated by a compiler, but also a high-level language code that may be executed by a computer using an interpreter or the like.

According to an embodiment of the present disclosure, a charging time period of a battery may be shortened by sequentially connecting a plurality of single-phase battery systems in series during charging, and charging the battery with a DC voltage three times a system voltage.

In addition, according to an embodiment of the present disclosure, a charging time period of a battery may be shortened by bypassing a battery of which charging has been completed.

While example embodiments have been illustrated and described above, it will be apparent to those skilled in the art that modifications and variations could be made without departing from the scope of the present disclosure as defined by the appended claims.

## Claims

1. A vehicle comprising:
a motor including a plurality of motor windings;
a plurality of single-phase battery systems connected to the plurality of motor windings and including a plurality of battery assemblies, wherein each of the plurality of battery assemblies include a battery and a power converter, and the power converter includes an inverter including AC module output terminals outputting an AC module voltage from a DC voltage stored in the battery; and
a pair of switches switching to connect the plurality of single-phase battery systems in series, in sequence, during charging.

2. The vehicle of claim 1, wherein one end of AC system output terminals of a first single-phase battery system among the plurality of single-phase battery systems is connected to a (+) terminal of a charger and one end of a first motor winding,
one end of AC system output terminals of a second single-phase battery system among the plurality of single-phase battery systems is connected to one end of a second motor winding,
one end of AC system output terminals of a third single-phase battery system among the plurality of single-phase battery systems is connected to one end of a third motor winding, and
the other ends of AC system output terminals of the plurality of single-phase battery systems are mutually connected at a connection point.

3. The vehicle of claim 2, wherein the pair of switches includes:
a first switch provided between one end of AC system output terminals of the first single-phase battery system among the plurality of single-phase battery systems and one end of the first motor winding; and
a second switch provided between the connection point and the other end of AC system output terminals of the third single-phase battery system.

4. The vehicle of claim 2 or 3, wherein a (-) terminal of the charger is connected to the other end of AC system output terminals of the third single-phase battery system among the plurality of single-phase battery systems.

5. The vehicle of one of claims 1 to 4, wherein inverter switches to transmit DC power provided from a charger to the battery during charging.

6. The vehicle of claim 5, wherein the inverter is an H-bridge single-phase inverter including an upper switch and a lower switch, provided in a first leg and connected in series; and an upper switch and a lower switch, provided in a second leg and connected in series.

7. The vehicle of claim 6, wherein, during charging, the upper switch of the first leg and the lower switch of the second leg are turned on, or the lower switch of the first leg and the upper switch of the second leg are turned on.

8. The vehicle of one of claims 1 to 7, wherein a number of a plurality of battery assemblies included in one single-phase battery system among the plurality of single-phase battery systems is equal to the number of a plurality of battery assemblies included in another single-phase battery system among the plurality of single-phase battery systems.

9. The vehicle of one of claims 1 to 8, wherein the power converter further includes at least one of:
a first DC/DC converter including first DC module output terminals connected to the battery in parallel, stepping down a voltage of the battery to a first DC module voltage and outputting the first DC module voltage; or
a second DC/DC converter including second DC module output terminals connected to the battery in parallel, stepping up a voltage of the battery to a second DC module voltage and outputting second DC module voltage.

10. The vehicle of claim 9, wherein the first DC module output terminals provided in the plurality of battery assemblies are connected to each other in parallel to output a first DC system voltage through first DC system output terminals, and
the first DC system output terminals included in the plurality of single-phase battery systems are connected to each other in parallel to output the first DC module voltage, and are configured to be connected to a first load using the first DC module voltage as a driving voltage.

11. The vehicle of claim 9, wherein second DC module output terminals provided in the plurality of battery assemblies are connected to each other in series to output a second DC system voltage through second DC system output terminals, and
the second DC system output terminals included in the plurality of single-phase battery systems are connected to each other in parallel to output an integer multiple of the second DC module voltage and are configured to be connected to a second load using an integer multiple of the second DC module voltage as a driving voltage.

12. The vehicle of one of claims 1 to 11, wherein the AC module output terminals provided in the plurality of battery assemblies are connected to each other in series to output an AC system voltage through AC system output terminals, and
AC system output terminals included in the plurality of single-phase battery systems have the same phase difference and output an integer multiple of the AC module voltage and are configured to be connected to an AC load using an integer multiple of the AC module voltage as a driving voltage.

13. The vehicle of claim 2, further including a controller performing charging control of the plurality of battery assemblies, for each of the plurality of single-phase battery systems.

14. The vehicle of claim 13, wherein the controller is configured to:
monitor, in real time, a state-of-charge (SOC) of a battery included in each of the plurality of battery assemblies, for each of the plurality of single-phase battery systems, and
bypass a battery of which charging has been completed, based on the monitored SOC of the battery.

15. The vehicle of claim 13, wherein the controller is configured to bypass a battery of which state-of-charge of a battery included in each of the plurality of battery assemblies, monitored in real time, is equal to or higher than a preset state-of-charge.

## Amended claims

### Amended claims in accordance with Rule 137(2) EPC.

1. A vehicle comprising:
a motor (5) including a plurality of motor windings;
a plurality of single-phase battery systems (100-1, 100-2, 100-3) connected to the plurality of motor windings (La, Lb, Lc) and including a plurality of battery assemblies, wherein each of the plurality of battery assemblies include a battery and a power converter, and the power converter includes an inverter including AC module output terminals outputting an AC module voltage from a DC voltage stored in the battery; and
a pair of switches (421, 422) switching to connect the plurality of single-phase battery systems (100-1, 100-2, 100-3) in series, in sequence, during charging, **characterized in that**,
one end of AC system output terminals of a first single-phase battery system (100-1) among the plurality of single-phase battery systems (100-1, 100-2, 100-3) is connected to a (+) terminal of a charger (2) and one end of a first motor winding (La),
one end of AC system output terminals of a second single-phase battery system (100-2) among the plurality of single-phase battery systems (100-1, 100-2, 100-3) is connected to one end of a second motor winding (Lb),
one end of AC system output terminals of a third single-phase battery system (100-3) among the plurality of single-phase battery systems (100-1, 100-2, 100-3) is connected to one end of a third motor winding (Lc), and
the other ends of AC system output terminals of the plurality of single-phase battery systems (100-1, 100-2, 100-3) are mutually connected at a connection point (411).

2. The vehicle of claim 1, wherein the pair of switches (421, 422) includes:
a first switch (421, 422) provided between one end of AC system output terminals of the first single-phase battery system (100-1) among the plurality of single-phase battery systems (100-1, 100-2, 100-3) and one end of the first motor winding (La); and
a second switch (421, 422) provided between the connection point (411) and the other end of AC system output terminals of the third single-phase battery system.

3. The vehicle of claim 1, wherein a (-) terminal of the charger (2) is connected to the other end of AC system output terminals of the third single-phase battery system (100-3) among the plurality of single-phase battery systems (100-1, 100-2, 100-3).

4. The vehicle of one of claims 1 to 3, wherein inverter switches to transmit DC power provided from a charger (5) to the battery during charging.

5. The vehicle of claim 1, wherein the inverter (120) is an H-bridge single-phase inverter including an upper switch and a lower switch, provided in a first leg and connected in series; and an upper switch and a lower switch, provided in a second leg and connected in series.

6. The vehicle of claim 5, wherein, during charging, the upper switch of the first leg and the lower switch of the second leg are turned on, or the lower switch of the first leg and the upper switch of the second leg are turned on.

7. The vehicle of one of claims 1 to 6, wherein a number of a plurality of battery assemblies included in one single-phase battery system among the plurality of single-phase battery systems is equal to the number of a plurality of battery assemblies included in another single-phase battery system among the plurality of single-phase battery systems.

8. The vehicle of one of claims 1 to 7, wherein the power converter further includes at least one of:
a first DC/DC converter including first DC module output terminals connected to the battery in parallel, stepping down a voltage of the battery to a first DC module voltage and outputting the first DC module voltage; or
a second DC/DC converter including second DC module output terminals connected to the battery in parallel, stepping up a voltage of the battery to a second DC module voltage and outputting second DC module voltage.

9. The vehicle of claim 8, wherein the first DC module output terminals provided in the plurality of battery assemblies are connected to each other in parallel to output a first DC system voltage through first DC system output terminals, and
the first DC system output terminals included in the plurality of single-phase battery systems are connected to each other in parallel to output the first DC module voltage, and are configured to be connected to a first load using the first DC module voltage as a driving voltage.

10. The vehicle of claim 8, wherein second DC module output terminals provided in the plurality of battery assemblies are connected to each other in series to output a second DC system voltage through second DC system output terminals, and
the second DC system output terminals included in the plurality of single-phase battery systems are connected to each other in parallel to output an integer multiple of the second DC module voltage and are configured to be connected to a second load using an integer multiple of the second DC module voltage as a driving voltage.

11. The vehicle of one of claims 1 to 10, wherein the AC module output terminals provided in the plurality of battery assemblies are connected to each other in series to output an AC system voltage through AC system output terminals, and
AC system output terminals included in the plurality of single-phase battery systems have the same phase difference and output an integer multiple of the AC module voltage and are configured to be connected to an AC load using an integer multiple of the AC module voltage as a driving voltage.

12. The vehicle of claim 1, further including a controller (100-4) performing charging control of the plurality of battery assemblies, for each of the plurality of single-phase battery systems.

13. The vehicle of claim 12, wherein the controller (100-4) is configured to:
monitor, in real time, a state-of-charge (SOC) of a battery included in each of the plurality of battery assemblies, for each of the plurality of single-phase battery systems, and
bypass a battery of which charging has been completed, based on the monitored SOC of the battery.

14. The vehicle of claim 12, wherein the controller (100-4) is configured to bypass a battery of which state-of-charge of a battery included in each of the plurality of battery assemblies, monitored in real time, is equal to or higher than a preset state-of-charge.
